# FASCICULE DE BREVET EUROPEEN

(11) **EP 0 622 616 B1**
(45) Date de publication et mention de la délivrance du brevet: **13.05.1998**
(21) Numéro de dépôt: 94400557.8
(22) Date de dépôt: 15.03.1994
(51) Int. Cl.: G01F 23/00, G01F 23/28

(54) **Dispositif pour mesurer le niveau d'une interface dans un liquide chargé de particules en suspension**
Vorrichtung zur Niveaumessung einer Grenzschicht in einer Flüssigkeit mit Schwebteilchen
Apparatus for measuring the level of an interface of a liquid with suspending particles

(30) Priorité: 16.03.1993 FR 9303002
(43) Date de publication de la demande: 02.11.1994
(73) Titulaire: ELECTRICITE DE FRANCE Service National, 75008 Paris (FR)
(72) Inventeur: Emin, Michel, F-69003 Lyon (FR)
(74) Mandataire: Martin, Jean-Jacques

(56) Documents cités:
- EP-A- 0 566 888
- FR-A- 2 086 934
- US-A- 3 423 992
- INSTRUMENT PRACTICE, vol.25, no.4, Avril 1971, LONDON GB pages 214 - 216 C.H. LAYCOCK 'ULTRASONIC POSITION MEASUREMENTS FOR LIQUID/LIQUID INTERFACES'
- PATENT ABSTRACTS OF JAPAN vol. 7, no. 253 (P-235) (1398) 10 Novembre 1983 & JP-A-58 135 918 (MITSUBISHI) 12 Août 1983

## Description

La présente invention concerne la mesure du niveau d'une interface dans un liquide chargé de particules en suspension, notamment mais non exclusivement la mesure de l'épaisseur d'un dépôt de particules ayant sédimenté au fond d'un bassin de décantation de ce liquide.

On a proposé des dispositifs de mesure comprenant une sonde mobile accrochée à un câble qui est déroulé pour descendre la sonde dans le liquide. Lorsque la sonde rencontre une interface dans le liquide, la variation de densité à la traversée de l'interface modifie le poids apparent de la sonde immergée et il suffit de détecter l'instant de cette modification pour connaître le niveau de l'interface en mesurant la longueur de câble déroulée. Ces dispositifs connus sont d'un emploi mal aisé lorsque les particules en suspension dans le liquide ont tendance à modifier le poids apparent de la sonde au cours de sa descente en s'agglomérant et en se collant à celle-ci.

On a également proposé des dispositifs de mesure à distance du niveau d'une interface comprenant un capteur immergé dans le liquide, apte à mesurer par des méthodes accoustiques ou optiques le niveau de l'interface. Ces dispositifs connus présentent l'inconvénient de nécessiter un nettoyage fréquent du capteur car les particules en suspension ont tendance à adhérer au capteur et à perturber son fonctionnement.

En outre, les dispositifs connus précités sont peu appropriés à une utilisation dans le domaine nucléaire pour mesurer le niveau d'une interface au sein d'un liquide chargé de particules radioactives. On se préoccupe en effet dans le domaine nucléaire, de façon générale, d'éloigner le plus possible le matériel de mesure et les hommes chargés de l'entretien de ce matériel des sources de radioactivité. Le nettoyage fréquent d'un capteur sur lequel se déposent des particules radioactives va à l'encontre de cette préoccupation.

La présente invention vise à proposer un dispositif pour mesurer le niveau d'une interface dans un liquide chargé de particules en suspension qui remédie aux inconvénients précités et elle y parvient par le fait que le dispositif comporte une cloche de mesure délimitant un volume intérieur ouvert vers le bas dans le liquide, un capteur de niveau d'interface, adapté à effectuer des mesures de niveau d'interface dans ledit liquide au travers d'une surface de mesure débouchant dans ledit volume intérieur de la cloche et des moyens pour déplacer le niveau du liquide dans la cloche en vue de maintenir la surface de mesure hors dudit liquide lors des périodes de non utilisation du capteur et au contact dudit liquide lors de l'utilisation du capteur.

Ainsi, en évitant le contact prolongé de la surface de mesure avec le liquide, lors des périodes de non utilisation du capteur, on empêche un dépôt de particules sur cette surface et l'on remédie aux inconvénients précités des dispositifs connus. En outre, le dispositif selon l'invention permet d'éloigner le capteur de la surface du liquide dans lequel on veut mesurer le niveau d'interface en installant ladite surface de mesure à une hauteur connue au-dessus du niveau de la surface du liquide et en faisant remonter le liquide dans la cloche lorsque l'on désire utiliser le capteur.

Lorsque la surface de mesure est située au-dessus de la surface du liquide notamment, lesdits moyens pour déplacer le niveau du liquide comprennent avantageusement une source de vide et un conduit débouchant dans ledit volume intérieur de cloche, au-dessus de ladite surface, pour faire communiquer cette source de vide avec ledit volume intérieur de cloche.

Lorsque ladite surface de mesure est située sous la surface dudit liquide notamment, lesdits moyens pour déplacer le niveau du liquide comprennent avantageusement une source de gaz sous pression et un conduit pour faire communiquer cette source de gaz sous pression avec ledit volume intérieur de cloche.

Avantageusement, le dispositif selon l'invention comporte une source de liquide non chargé de particules en suspension et un conduit pour faire communiquer cette source de liquide avec ledit volume intérieur de cloche. On peut ainsi ménager à l'intérieur de la cloche une hauteur de garde de liquide non chargé de particules à travers laquelle peuvent s'effectuer les mesures de niveau d'interface, sans risque d'adhésion des particules sur la surface de mesure.

Dans une réalisation préférée du dispositif selon l'invention, la cloche de mesure comprend un tube vertical à immerger partiellement dans le liquide et un bouchon placé dans le tube en retrait de son extrémité inférieure, ce bouchon présentant sur sa face axiale inférieure une surface centrale formant ladite surface de mesure et un bord chanfreiné sur lequel débouche un conduit.

D'autres caractéristiques et avantages de la présente invention apparaîtront à la lecture de la description détaillée qui va suivre, d'exemples de réalisation non limitatifs de l'invention et à l'examen du dessin annexé sur lequel :
- la figure 1 est une vue schématique d'une première réalisation du dispositif selon l'invention, correspondant à une surface de mesure située sous la surface du liquide hors de la cloche et montrant le niveau du liquide dans la cloche, pendant une période de non utilisation du capteur,
- la figure 2 est une vue analogue à la figure 1 montrant le niveau du liquide dans la cloche pendant l'utilisation du capteur,
- la figure 3 est une vue schématique d'une seconde réalisation du dispositif selon l'invention, correspondant à une surface de mesure située au-dessus de la surface du liquide hors de la cloche et montrant le niveau du liquide dans la cloche, pendant une période de non utilisation du capteur,
- la figure 4 est une vue analogue à la figure 3 montrant le niveau du liquide dans la cloche pendant l'utilisation du capteur,
- la figure 5 est une coupe axiale schématique montrant une réalisation préférée de la cloche de mesure selon l'invention,
- la figure 6 illustre des détails de réalisation de la cloche représentée sur la figure 5,
- la figure 7 est une vue en coupe selon le trait de coupe VII-VII de la figure 6,
- la figure 8 est une vue en section selon le trait de coupe VIII de la figure 7.

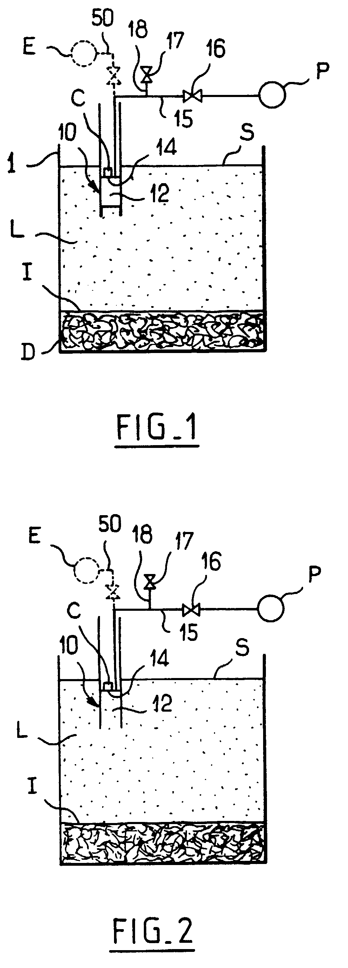

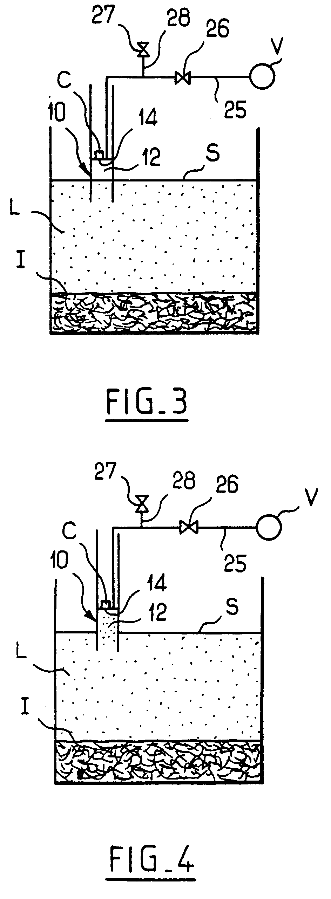

On a partiellement représenté sur la figure 1 une cuve 1 contenant un liquide L chargé de particules en suspension dont la décantation forme un dépôt D au fond de la cuve. Le terme "particule" désigne dans la présente invention tout corpuscule solide ou liquide. L'interface I dont on cherche à mesurer le niveau correspond à la surface supérieure du dépôt D dans les exemples de réalisation décrits mais il pourrait bien entendu s'agir de l'interface entre deux liquides de nature différente. La mesure de niveau d'interface s'effectue à l'aide d'un capteur C connu en lui-même au travers d'une surface de mesure 14 située au-dessus de la surface S du liquide dans l'exemple de réalisation des figures 1 et 2 et en dessous de la surface S du liquide dans l'exemple de réalisation des figures 3 et 4. Le capteur C est par exemple un capteur à ultrasons ou une caméra.

Conformément à l'invention, la surface de mesure 14 se situe à l'intérieur d'une cloche de mesure 10 définissant un volume intérieur de cloche 12 ouvert vers le bas dans le liquide et des moyens sont prévus pour déplacer le niveau du liquide dans la cloche entre des périodes d'utilisation et de non utilisation du capteur C.

Lorsque la surface de mesure 14 se situe sous la surface S du liquide hors de la cloche 10 (figures 1 et 2), les moyens précités comportent avantageusement une source de gaz sous pression P, de préférence de l'air comprimé, communiquant par un conduit 15, au travers d'une vanne de réglage 16, avec le volume intérieur 12. Un conduit d'échappement 18 muni d'une vanne 17 communiquant avec l'extérieur est branché sur la portion de conduit 15 se situant entre la vanne 16 et la cloche de mesure 10. Lorsque la vanne 16 est ouverte et la vanne 17 fermée, l'admission du gaz sous pression dans le volume intérieur 12 chasse le liquide contenu à l'intérieur de la cloche de mesure 10 et fait descendre le niveau de celui-ci en deçà de ladite surface de mesure 14. De cette façon on évite, hors des périodes d'utilisation du capteur, et en particulier lorsque le liquide déversé dans la cuve n'a pas encore eu le temps de décanter, un dépôt de particules sur la surface de mesure 14. Pour effectuer la mesure, la vanne 16 est fermée et la vanne 17 ouverte pour mettre en communication le volume intérieur 12 de cloche 10 et l'extérieur, de sorte que le volume intérieur 12 se retrouve à pression ambiante et permet au liquide de remonter dans la cloche de mesure 10 jusqu'à atteindre la surface de mesure 14.

Lorsque la surface de mesure 14 se situe en dessous de la surface S du liquide hors de la cloche (figures 3 et 4), les moyens pour déplacer le niveau du liquide dans la cloche de mesure 10 comportent de préférence une source de vide V reliée par un conduit 25, au travers d'une vanne de réglage 26, au volume intérieur 12. Un conduit d'échappement 28 muni d'une vanne 27 est branché sur la portion s'étendant entre la vanne 26 et le volume intérieur de cloche 12. Hors des périodes d'utilisation du capteur, la vanne 26 est fermée et la vanne 27 ouverte de sorte que le volume intérieur 12 se trouve à pression ambiante et la surface de mesure 14 est au-dessus du niveau du liquide dans la cloche 10. On évite ainsi un dépôt de particules sur la surface de mesure 14. Pour utiliser le capteur, on ferme la vanne 27 et l'on ouvre la vanne 28 ce qui crée une dépression dans le volume intérieur 12 et provoque la remontée du liquide dans la cloche jusqu'à la surface de mesure 14. Bien entendu, le conduit 25 débouche dans le volume intérieur de cloche au même niveau ou au-dessus de la surface de mesure 14 de façon à assurer la remontée du liquide jusqu'à la surface de mesure 14.

La mesure effectuée par le capteur C permet à l'homme de métier de déduire aisément, connaissant la position de la surface de mesure 14, le niveau réel de l'interface 1. On peut bien entendu, sans sortir du cadre de la présente invention, proposer de relier le volume intérieur 12 de la cloche de mesure à la fois à une source de vide et à une source de gaz sous pression en vue de déplacer le niveau du liquide dans la cloche quelle que soit la position relative de la surface de mesure 14 par rapport au niveau S du liquide hors de la cloche.

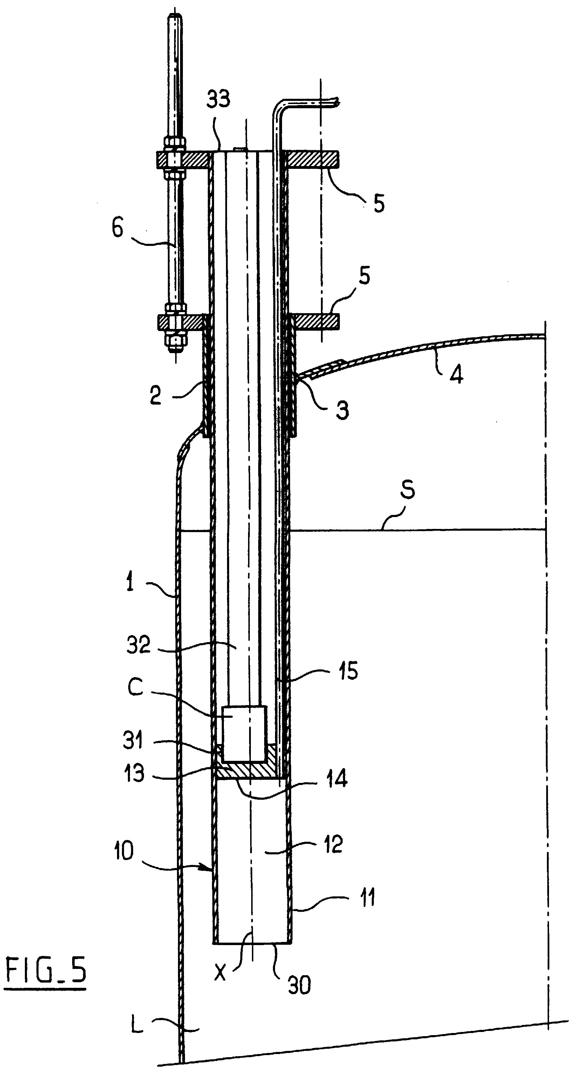

On a représenté plus particulièrement sur les figures 5 à 8 un exemple de réalisation préféré d'une cloche de mesure 10 conforme à l'invention.

La cloche de mesure 10 comprend un tube vertical 11, cylindrique de révolution autour d'un axe X, ouvert à ses deux extrémités inférieure 30 et supérieure 33 et un bouchon 13 disposé en retrait de l'extrémité inférieure 30 du tube 11. Le volume défini par l'intérieur du tube 11 entre sa tranche d'extrémité inférieure 30 et la face inférieure du bouchon 13 délimite ledit volume intérieur 12 précité. Le tube 11 se prolonge vers le haut hors de la cuve 1 au travers d'un manchon vertical 2 solidaire d'une plaque intermédiaire 3 fixée au couvercle 4 de la cuve. Le manchon 2 et le tube 11 sont fixés à deux brides 5 respectivement, ces brides étant supportées par des tiges filetées 6 dont une seule apparaît sur la figure 5. Le capteur C est disposé dans un logement 31 ménagé sur la face supérieure du bouchon 13 et il est maintenu en appui contre cette face supérieure par un tube 32, de préférence réalisé en matière époxy d'un millimètre d'épaisseur, s'étendant parallèlement à l'axe X jusqu'à l'extrémité supérieure 33 du tube 11, au niveau de laquelle il est maintenu en position par une entretoise non représentée. Un ou plusieurs câbles électriques non représentés servant à l'alimentation du capteur et à la transmission des informations émanant de ce dernier sont disposés à l'intérieur du tube 32. Un conduit 15 communiquant avec une source de gaz sous pression s'étend à l'intérieur du tube 11 de façon excentrée et traverse le bouchon 13 pour déboucher sur la face inférieure de ce dernier.

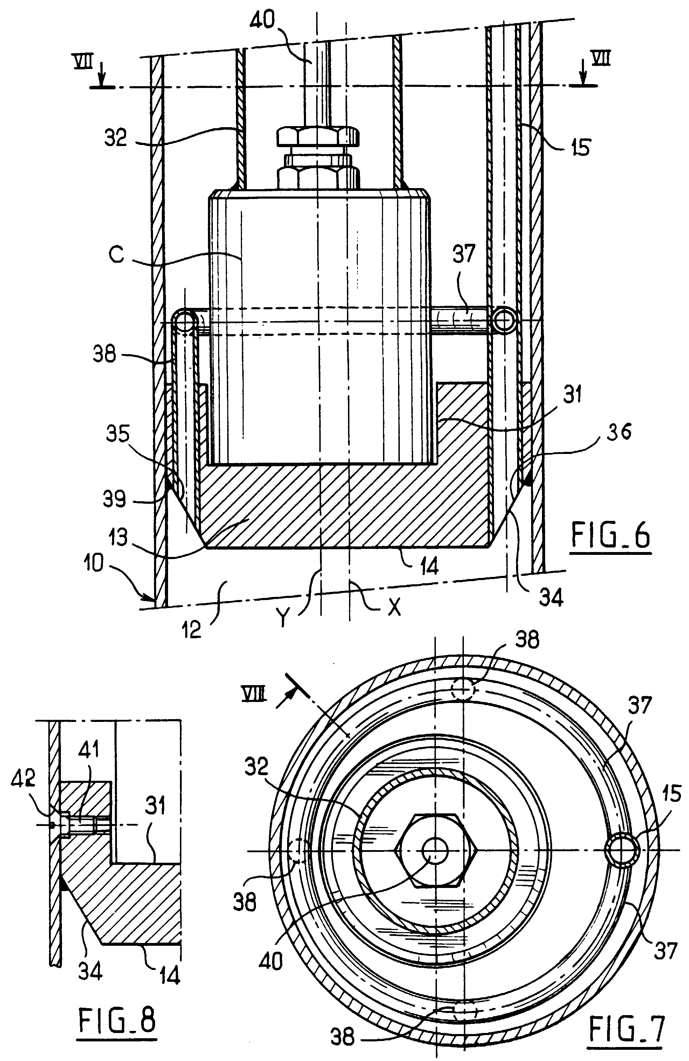

Des caractéristiques avantageuses de réalisation de la cloche de mesure 10 apparaissent à l'examen des figures 6 à 8. On remarquera en particulier sur la figure 6 que la face inférieure du bouchon 13 présente à sa périphérie un bord chanfreiné 34 symétrique de révolution autour de l'axe X, de préférence comme représenté incliné à 45° sur l'axe X, sur lequel débouchent des orifices 35 et 36 communiquant avec le conduit 15 précité. Dans l'exemple de réalisation décrit, le conduit 15 traverse le bouchon 13 pour déboucher directement par l'orifice référencé 36 sur le bord chanfreiné 34 et communique par ailleurs, au moyen de deux conduits de dérivation 37 disposés en demi-cercle autour de l'axe X, avec trois buses 38 traversant le bouchon 13 selon l'axe X et débouchant chacune sur la face inférieure de celui-ci pour former les orifices référencés 35. De préférence comme représenté sur la figure 7, les orifices 35 et 36 sont équirépartis angulairement autour de l'axe X. Un cordon de colle annulaire 39 est disposé dans l'angle formé entre le bord chanfreiné 34 et la paroi interne du tube 11 pour garantir l'étanchéité du bouchon 13 à ce niveau. Le capteur C est disposé dans un logement 31 excentré réalisé sur la face supérieure du bouchon 13, cylindrique de révolution autour d'un axe Y parallèle à l'axe X et disposé par rapport à ce dernier du côté opposé au conduit 15. On a référencé 40 sur les figures 6 et 7 un câble d'alimentation et de transmission des informations émanant du capteur.

On remarquera à l'examen de la figure 8 que le bouchon 13 est de préférence fixé à la paroi du tube 11 au moyen de vis à tête fraisée engagées dans des perçages ménagés dans la partie supérieure du bouchon 13 bordant le logement 31, d'axes perpendiculaires à l'axe X. Des fraisures 42 épousant la forme des têtes de vis sont ménagées dans la paroi du tube 11.

Le bouchon 13 est de préférence réalisé en polycarbonate.

De préférence, la surface de mesure 14 est polie de façon à réduire au maximum l'adhérence des particules en suspension lors de l'utilisation du capteur.

Finalement, l'invention permet d'effectuer des mesures de niveau d'interface dans un liquide chargé de particules en suspension sans nécessiter un nettoyage fréquent de la sonde ou du capteur comme cela était connu des dispositifs antérieurs et l'invention convient particulièrement bien à une utilisation dans le domaine nucléaire.

## Revendications

1. Dispositif pour mesurer le niveau d'une interface (I) dans un liquide (L) chargé de particules en suspension, caractérisé en ce qu'il comporte une cloche de mesure (10) délimitant un volume intérieur (12) ouvert vers le bas dans le liquide, un capteur (C) de niveau d'interface, adapté à effectuer des mesures de niveau d'interface dans ledit liquide au travers d'une surface de mesure (14) débouchant dans ledit volume intérieur (12) de la cloche (10) et des moyens pour déplacer le niveau du liquide dans la cloche (10) en vue de maintenir la surface de mesure (14) hors dudit liquide lors des périodes de non utilisation du capteur (C) et au contact dudit liquide lors de l'utilisation du capteur (C).

2. Dispositif selon la revendication 1, caractérisé en ce que lesdits moyens pour déplacer le niveau du liquide comprennent une source de gaz sous pression (P) et un conduit (15) pour faire communiquer cette source avec ledit volume intérieur (12) de cloche.

3. Dispositif selon l'une quelconque des revendications 1 et 2, caractérisé en ce que lesdits moyens pour déplacer le niveau du liquide comprennent une source de vide (V) et un conduit (25) pour faire communiquer cette source avec ledit volume intérieur de cloche, débouchant dans ce dernier au-dessus de ladite surface de mesure.

4. Dispositif selon l'une quelconque des revendications 1 à 3, caractérisé en ce que le dispositif comporte une source (E) de liquide non chargé de particules en suspension et un conduit (50) pour faire communiquer cette source avec ledit volume intérieur (12) de cloche.

5. Dispositif selon l'une quelconque des revendications 2 à 4, caractérisé en ce que la cloche de mesure comprend un tube vertical (11) à immerger partiellement dans ledit liquide et un bouchon (13) placé dans le tube en retrait de son extrémité inférieure (30), ce bouchon présentant sur sa face axiale inférieure une surface centrale formant ladite surface de mesure (14) et un bord chanfreiné (34) sur lequel débouche un conduit.

6. Dispositif selon la revendication 5, caractérisé en ce que ledit conduit débouche sur le bord chanfreiné en plusieurs orifices (35, 36) équirépartis angulairement.

7. Dispositif selon l'une quelconque des revendications 5 et 6, caractérisé en ce que ledit bouchon (13) présente sur sa face axiale supérieure un logement (31) pour recevoir ledit capteur (C).

8. Dispositif selon l'une quelconque des revendications 5 à 7, caractérisé en ce que ledit bouchon est en polycarbonate.

9. Dispositif selon l'une quelconque des revendications 1 à 8, caractérisé en ce que ladite surface de mesure (14) est polie.

10. Dispositif selon l'une quelconque des revendications 1 à 9, caractérisé en ce que ledit capteur est choisi dans la liste suivante : capteur à ultrasons, caméra.

11. Dispositif selon l'une quelconque des revendications 1 à 10, caractérisé en ce qu'il est utilisé pour la mesure du niveau d'interface dans un liquide chargé de particules radioactives.

## Patentansprüche

1. Vorrichtung zur Niveaumessung einer Grenzschicht (1) in einer Flüssigkeit (L) mit Schwebeteilchen, dadurch gekennzeichnet, daß sie eine Meßglocke (10), die einen nach unten offenen Innenraum (12) in der Flüssigkeit begrenzt, einen Meßwertaufnehmer (C) für das Niveau der Grenzschicht, welcher derart eingerichtet ist, daß er Messungen des Niveaus der Grenzschicht in der Flüssigkeit durch eine Meßfläche (14) hindurch auszuführen vermag, die zum Innenraum (12) der Glokke (10) hin offen ist, sowie eine Einrichtung zum Verschieben des Flüssigkeitsniveaus in der Glocke (10) aufweist, um die Flüssigkeit während der Nichtbenutzung des Meßwertaufnehmers (C) von der Meßfläche (14) fernzuhalten, aber während der Benutzung des Meßwertaufnehmers (C) den Kontakt dieser Flüssigkeit mit ihr zu ermöglichen.

2. Vorrichtung nach Anspruch 1, dadurch gekennzeichnet, daß die Einrichtung zum Verschieben des Flüssigkeitsniveaus eine unter Druck (P) stehende Gasquelle und eine Leitung (15) aufweist, welche diese Quelle mit dem Innenraum (12) der Glocke (10) verbindet.

3. Vorrichtung nach einem der Ansprüche 1 oder 2, dadurch gekennzeichnet, daß die Einrichtung zum Verschieben des Flüssigkeitsniveaus eine Vakuumquelle (V) und eine Leitung (25) aufweist, welche diese Quelle mit dem Innenraum der Glocke verbindet und in derselben über der Meßfläche mündet.

4. Vorrichtung nach einem der Ansprüche 1 bis 3, dadurch gekennzeichnet, daß die Vorrichtung eine Quelle (E) für eine keine Schwebeteilchen enthaltende Flüssigkeit sowie eine Leitung (50) aufweist, welche diese Quelle mit dem Innenraum (12) der Glocke verbindet.

5. Vorrichtung nach einem der Ansprüche 2 bis 4, dadurch gekennzeichnet, daß die Meßglocke ein senkrechtes Rohr (11) zum teilweisen Eintauchen in die Flüssigkeit sowie einen in dem Rohr gegenüber dessen unterem Ende (30) zurückgesetzt angeordneten Pfropfen (13) aufweist, wobei dieser Pfropfen seinerseits an seiner unteren axialen Stirnfläche eine zentrale Fläche, welche die genannte Meßfläche (12) bildet und einen abgeschrägten Rand (34), an dem eine Leitung mündet, aufweist.

6. Vorrichtung nach Anspruch 5, dadurch gekennzeichnet, daß die genannte Leitung auf dem abgeschrägten Rand in mehreren, im gleichen Winkel zueinander angeordneten Öffnungen (35, 36) mündet.

7. Vorrichtung nach einem der Ansprüche 5 oder 6, dadurch gekennzeichnet, daß der Pfropfen (13) an seiner oberen axialen Stirnfläche einen Sitz (31) zur Aufnahme des Meßwertaufnehmers (C) aufweist.

8. Vorrichtung nach einem der Ansprüche 5 bis 7, dadurch gekennzeichnet, daß der Pfropfen aus Polycarbonat besteht.

9. Vorrichtung nach einem der Ansprüche 1 bis 8, dadurch gekennzeichnet, daß die Meßfläche (14) poliert ist.

10. Vorrichtung nach einem der Ansprüche 1 bis 9, dadurch gekennzeichnet, daß der Meßwertaufnehmer aus der Gruppe ausgewählt ist, welche Ultraschallaufnehmer oder Kameras umfaßt.

11. Vorrichtung nach einem der Ansprüche 1 bis 10, dadurch gekennzeichnet, daß sie zur Niveaumessung einer Grenzschicht in einer Flüssigkeit mit radioaktiven Schwebeteilchen verwendet wird.

## Claims

1. Apparatus for measuring the level of an interface (I) in a liquid (L) charged with particles in suspension, the apparatus being characterized in that it includes a measurement bell (10) defining an inside volume (12) that is downwardly open in the liquid, an interface level sensor (C) adapted to take measurements of the level of the interface in said liquid via a measurement surface (14) opening out into said inside volume (12) of the bell (10), and means for moving the level of the liquid in the bell (10) to maintain the measurement surface (14) out of said liquid during periods when the sensor (C) is not in use, and in contact with said liquid when the sensor (C) is in use.

2. Apparatus according to claim 1, characterized in that said means for displacing the level of the liquid comprise a source of gas under pressure (P) and a duct (15) for causing said source to communicate with said inside volume (12) of the bell.

3. Apparatus according to claim 1 or 2, characterized in that said means for displacing the level of the liquid comprise a vacuum source (V) and a duct (25) for causing said source to communicate with said inside volume of the bell, and opening out therein above said measurement surface.

4. Apparatus according to any one of claims 1 to 3, characterized in that the apparatus includes a source (E) of liquid that is not charged with particles in suspension, and a duct (50) for causing said source to communicate with said inside volume (12) of the bell.

5. Apparatus according to any one of claims 2 to 4, characterized in that the measuring bell comprises a vertical tube (11) for partially immersing in said liquid, and a plug (13) placed in the tube and set back from the bottom end (30) thereof, said plug having on its bottom axial face both a central surface forming said measurement surface (14) and a chamfered edge (34) through which a duct opens out.

6. Apparatus according to claim 5, characterized in that said duct opens out through the chamfered edge via a plurality of orifices (35, 36) that are uniformly spaced apart, angularly.

7. Apparatus according to claim 5 or 6, characterized in that said plug (13) has a housing (31) on its top axial face for receiving said sensor (C).

8. Apparatus according to any one of claims 5 to 7, characterized in that said plug is made of polycarbonate.

9. Apparatus according to any one of claims 1 to 8, characterized in that said measurement surface (14) is polished.

10. Apparatus according to any one of claims 1 to 9, characterized in that said sensor is selected from the following list: an ultrasound sensor, a camera.

11. Apparatus according to any one of claims 1 to 10, characterized in that it is used for measuring the level of the interface in a liquid charged with radioactive particles.
